(19) Europäisches Patentamt
European Patent Office
Office européen des brevets

(11) Veröffentlichungsnummer: **0 250 939 B1**

(12) **EUROPÄISCHE PATENTSCHRIFT**

(45) Veröffentlichungstag der Patentschrift: **01.04.92**

(51) Int. Cl.5: **B01D 35/18**, B01D 29/00, F26B 7/00, B01D 29/075

(21) Anmeldenummer: **87108249.1**

(22) Anmeldetag: **06.06.87**

(54) **Filternutsch-Trockner.**

(30) Priorität: **12.06.86 DE 3619810**
**08.10.86 DE 3634197**
**15.10.86 DE 3635079**

(43) Veröffentlichungstag der Anmeldung:
**07.01.88 Patentblatt 88/01**

(45) Bekanntmachung des Hinweises auf die
Patenterteilung:
**01.04.92 Patentblatt 92/14**

(84) Benannte Vertragsstaaten:
**AT BE CH DE ES FR GB IT LI NL SE**

(56) Entgegenhaltungen:
DE-A- 3 338 572     DE-B- 2 848 109
GB-A- 1 085 263     US-A- 3 296 709
US-A- 3 889 391     US-A- 4 276 701

(73) Patentinhaber: **Titus, Hans Joachim, Dipl.-Ing.**
**8, Ouai de Sanbarbani**
**98000 Monaco(MC)**

(72) Erfinder: **Titus, Hans Joachim, Dipl.-Ing.**
**8, Ouai de Sanbarbani**
**98000 Monaco(MC)**

(74) Vertreter: **Raeck, Wilfrid, Dipl.-Ing.**
**Moserstrasse 8**
**W-7000 Stuttgart 1(DE)**

EP 0 250 939 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Filternutsch-Trockner, insbesondere zur Isolierung und Trocknung von Feststoffprodukten aus Suspensionen, bestehend aus einem geschlosssenenen Behälter und einer zwischen einer Außenwand und einer mit Abstand dazu angeordneten Filterfläche gebildeten Filterkammer, die mit gesteuerten, wahlweise an eine Vakuum-, Druckgas- oder Waschflüssigkeitsquelle angeschlossenen Verteilerleitungen verbunden sind.

Bei einem aus der US-A-3 296 709 bekannten Apparat der vorbezeichneten Art ist ein faß- oder trommelförmiger Behälter im Querschnitt etwa diagonal auf einer waagerechten Welle befestigt, durch deren Drehung der Behälter und das darin eingefüllte Produkt bei der Trocknung zu Taumelbewegungen angetrieben werden. Auf einer Seite ist der Behälter mit einer domartigen Ausstülpung versehen, die zum Behälter hin durch eine Filterfläche abgeschlossen ist, hinter der mit der Außenseite des Doms eine Filterkammer gebildet wird. Durch die Hohlwelle hindurch sind außer einer in die Filterkammer führenden Saugleitung auch andere, ventilgesteuerte Rohrleitungen hindurchgeführt, durch die pulvrige flüssige und/oder gasförmige Substanzen, z. B. zum Waschen oder zum Evakuieren in den Behälter geleitet sind. In den Behälter des bekannten Apparates können somit intermittierend oder kontinuierlich beliebige, zur Bearbeitung des Produktes benötigte Substanzen eingeleitet oder herausgeführt werden, und zwar vor, während oder auch nach dem Waschen, Mischen, Filtrieren und/oder Heizen/Unterkühlen des zu trocknenden Produktes.

Mit diesem bekannten Filtrationsapparat oder auch mit einer Filternutsche sind ohne Anwendung der nur mit hohem konstruktivem Aufwand erreichbaren Fliehkraftwirkung nur verhältnismäßig hohe Endfeuchtegrade erreichbar, so daß dann auch die Behälterentleerung sich schwierig gestaltet, weil das mit hoher Endfeuchte behaftete Produkt noch schwierig oder pastös anfällt.

Die notwendig langen Filtrationszeiten beim Betrieb einer Filternutsche erklären sich verfahrenstechnisch daraus, daß die Mutterlauge durch die auf der Filterfläche anwachsende Produktschicht hindurchsickern muß und daß ab einer gewissen Kuchendicke noch vorhandene Mutterlauge lange Zeit auf dem Kuchen schwimmt, bis sie durch Rißbildung und Kanalbildung durch den Produktkuchen hindurch Abflußmöglichkeiten geschaffen hat.

Beim Waschen des Produktes nimmt die Waschflüssigkeit den Weg des geringsten Widerstandes durch die Risse, ohne mit der Produktmasse zum Waschen in Berührung zu kommen.

Zwecks Abhilfe eingesetzte Glattstreicheinrichtungen in Filternutschen glätten lediglich die Oberfläche des Produktkuchens und können die auch in die Tiefe gehende Wirkung der Risse und Kanäle nicht beseitigen.

Der Erfindung liegt die Aufgabe zugrunde, einen Filternutsch-Trockner der eingangs bezeichneten Art dahingehend auszugestalten und zu verbessern, daß im Betrieb während des Filtrierens, Waschens und Trocknens keine oder möglichst wenig diese Arbeitsgänge beeinträchtigende Risse im Produktkuchen entstehen. Diese Aufgabe ist erfindungsgemäß dadurch gelöst, daß der Behälter eine horizontale Hauptachse aufweist, sein Mantel überwiegend in der unteren Behälterhälfte aus der konkaven, insbesondere zylindrisch zur Hauptachse gekrümmten Filterfläche sowie aus der mit Abstand dazu verlaufenden Außenwand besteht, während der Abstand dazwischen in eine Mehrzahl von axialen Filterkammern unterteilt ist, und daß ein sich in Axialrichtung im Behälter erstreckender, eine Mehrzahl nebeneinander angeordneter, radial gerichteter, insbesondere beheizbarer Scheiben oder Scheibensegmente tragender und Zirkulationsleitungen enthaltender Rotor zum Homogenisieren des Produktkuchens während der Filtration oder zum Waschen und Trocknen des Produktes nach der Isolierung an einen Antrieb für pendelnde oder reversierbare Drehbewegungen angeschlossen ist.

Durch diese Bauform wird der grundsätzliche Nachteil ebener Filterflächen beseitigt, die während der Filtration Risse und Kanäle im Kuchen lassen, durch die nachträglich angewendete Waschflüssigkeit hindurchfließt, ohne die benachbarten Kuchenpartien von Mutterlauge freizuwaschen. Die konkav gekrümmte Filterfläche ermöglicht eine ungestörte Kuchenbildung weitestgehend ohne Risse, da das Gewicht des bis über die Behältermitte hochreichenden Produktkuchens seitlich entlang der gekrümmten Filterfläche nach unten drückt und dabei entstehende Risse ständig wieder geschlossen werden. Begünstigt wird diese Selbstverdichtung des Produktkuchens durch geringe Reibung auf der aus Metall oder Kunststoff bestehenden Filterfläche und durch eine glatte Oberfläche des Rotors. Somit kann der Produktkuchen mit einer Mindestmenge an Waschflüssigkeit dennoch sorgfältig gewaschen werden.

Der vorgeschlagene Filtrationsapparat läßt eine vielseitige Anpassung an unterschiedliche Betriebsbedingungen und -abläufe zu, die sich aus der Verarbeitung verschiedenartiger Produkte ergeben. In diesem Sinne können die jeweiligen Filterflächen über ein zu den Filterkammern führendes Verteilerleitungssystem und wahlweise anschließbare Vakuum- oder Druckgasquellen sowohl mit Überdruck im Behälter und äußerem Vakuum als auch mit äußerem Überdruck und mit Vakuum oder Normaldruck im Behälter beaufschlagbar sein.

Die Filterflächen können aus durch Sinterung miteinander verbundenen Metallgeweben oder aus mit Metallgeweben vereinigtem Sinterwerkstoff, Kunststoff oder anderem Filtermaterial bestehen. Wenn die Verteilerleitungen über Ventile von einem elektronischen Meß- und Regelsystem aus steuerbar sind, läßt sich beispielsweise der unterschiedliche Bedarf an Saugdruck der untersten Filterkammer gegenüber den seitlichen Filterkammern berücksichtigen. Genauso, wie über den Filter überschüssige Suspension oder Waschflüssigkeit abgesaugt wird, können umgekehrt die Filterflächen über das Verteilerleitungssystem von einer Waschflüssigkeitsquelle beaufschlagbar und zum gleichzeitigen Fluten des Behälters dort mündende Sprühdüsen einer Waschflüssigkeitsleitung vorgesehen sein.

Gemäß einem weiteren Merkmal des erfindungsgemäßen Filtrationsapparates kann ungefähr die Hälfte der Behälterstirnseiten als geneigte Filterflächen mit dahinter angeordneten Filterkammern ausgebildet sein, die am Umfang an die gekrümmte Filterfläche des Mantels anschließen. Auf diese Weise wird verhindert, daß sich der Produktkuchen von vertikalen Stirnwänden ablöst und in den Endbereichen des Behälters das Produkt ungewaschen verbleibt und dort die Waschflüssigkeit versickert und ungenutzt abgesaugt würde.

Bei einer bevorzugten Ausführungsform besteht der Rotor aus einem Hohlkörper mit abgeflachtem, insbesondere ovalem oder elliptischem Querschnitt, der im Filtrationsbetrieb von einer flachen Ausgangsstellung aus durch reversierende Schwenkbewegungen zwischen ungefähr 15° und 30° angetrieben ist und den Produktkuchen ohne Glattstreicheffekt verdichtet. Hierbei wirkt zusätzlich zu dem selbsttätig verdichteten Eigengewicht des Produktes aufgrund der gekrümmten Filterfläche noch die leichte Andrückbewegung des verhältnismäßig breiten Rotors, der bei seiner geringen Schwenkbewegung auf die oberen und von der Filterfläche entfernten Produktschichten einwirkt. Diese bei der reversierenden Schwenkbewegung des Rotors eintretende Verdichtung des Produktkuchens homogenisiert den Produktkuchen und schließt dort beim Absaugen der Mutterlauge gebildete Poren und Risse. Gleichzeitig entsteht zwischen dem Rotor und dem verdichteten Kuchen ein Spalt, in dem nachfolgend in den Behälter eingebrachte Waschflüssigkeit aufgenommen und über die Kuchenoberfläche verteilt wird.

Zweckmäßigerweise trägt der Rotor auf einer abgeflachten Seite nebeneinander Scheibensegmente, die sich symmetrisch über einen Bogen bis ungefähr 150° erstrecken und zur Unterstützung der Nachverdichtung des Produktkuchens während der Schwenkbewegungen des Rotors radiale Stirnflächen aufweisen. In diesem Sinne können außerdem an jedem Scheibensegment als radial äußere Fortsetzung der jeweiligen Stirnfläche angebrachte Schaufeln wirksam sein.

Gemäß einer weiteren Ausgestaltung wird vorgeschlagen, daß nebeneinander mehrere Abstreifschaber vorgesehen sind, die sich jeweils zwischen die benachbarten Scheiben oder Scheibensegmente erstrecken und insbesondere gemeinsam auf einer in der Nähe des Behältermantels gelagerten Schwenkwelle in eine dem Behälterumfang nahe Ruhestellung schwenkbar sind.

Die hohl oder mit inneren Leitblechen für ein Heizmedium ausgeführten Scheibensegmente können an Zirkulationsleitungen im Rotor angeschlossen sein, und außerdem besteht die Möglichkeit, die Oberflächen der Scheibensegmente wenigstens teilweise als Filterflächen auszubilden und über Verteilerleitungen innerhalb des Rotors wahlweise mit Saugdruck oder mit Trocknungsgas zu beaufschlagen. Neben ihrer Andrück- und Nachverdichtungsfunktion während des Filtrationsbetriebes haben die Scheibensegmente beim nachfolgenden Trocknen oder bei einem Anmaischvorgang die Aufgabe, entweder durch reversierende oder in einer Richtung rotierende Bewegungen das Produkt zu durchmischen. Die Scheibensegmente dienen auch zur beschleunigten Trocknung, wenn sie beispielsweise anteilig als vom Heizmedium durchströmte Kontakttrocknerflächen und als Filterflächen ausgeführt sind.

Wenn gemäß einer zusätzlichen Variante des erfindungsgemäßen Filtrationsapparates der Rotor auf einer Rotorwelle befestigt ist, die in einem Maschinenständer fliegend gelagert ist, kann der Behälter von der freien Stirnseite her beschickt oder entleert werden. Außerdem läßt sich dann der Behälter zur Reinigung und Wartung vom Rotor abziehen. Weiterhin kann auch der Behälter fliegend gelagert sein, indem er mit einer von seiner einen Stirnseite ausgehenden Lagerhülse auf der von einem Maschinenständer vorstehenden Rotorwelle um wenigstens 180° schwenkbar gelagert ist. Bei um 180° verschwenktem Behälter entstehen für das Trocknungsverfahren optimale Voraussetzungen, weil das von der nunmehr oberen gekrümmten Filterfläche herabfallende Produkt ständig von den beheizbaren Scheibensegmenten durchmischt und gegebenenfalls zusätzlich vom filterfreien, jedoch beheizbaren Behältermantel von unten her beheizt werden kann. Gleichzeitig wirken die Filterkammern über die gekrümmten Filterflächenanteile als Gasfilter, die mittels von außen angelagerter Druckgasstöße gereinigt werden.

Gemäß einem weiteren Merkmal der Scheiben oder Scheibensegmente haben die Schaufeln zum Produkttransport in Längsrichtung des Behälters einen Anstellwinkel und an ihrer Rückseite Stromlinienform. Dadurch sind die Scheiben oder Scheibensegmente je nach Drehrichtung in der Lage, das Produkt von dem einen zum anderen Behälterende und damit auch über die Mitte zu befördern, wo dann zur automatischen Entleerung des Behälters ein verschließbarer Produktauslaß vorgesehen sein kann.

Wenn der Rotor und die Rotorwelle bezüglich der Längsachse des zylindrischen Behälters exzentrisch um ein Maß nach oben versetzt sind, durch das der Abstand der Schaufeln von der geschlossenen Behälterwand einen Mindestwert besitzt, so läßt sich das getrocknete Produkt selbsttätig nahezu restlos über einen unteren Produktauslaß entleeren.

Weitere Merkmale und Vorteile der Erfindung ergeben sich aus der nachfolgenden Beschreibung von Ausführungsbeispielen der Erfindung anhand schematischer Zeichnungen. Die einzelnen Merkmale der Ansprüche können einzeln oder in anderer Kombination weitere Ausführungsformen der Erfindung bilden. Es zeigen schematisch

Fig. 1      einen Filtrationsapparat einer ersten Ausführungsform der Erfindung im Längsschnitt,

Fig. 2      eine andere Ausführungsform eines Filtrationsapparates gemäß der Erfindung im Längsschnitt,

Fig. 3      einen Querschnitt durch den Apparat nach Fig. 2 und

Fig. 4      einen Längsschnitt durch die Lagerung von Rotorwelle und Behälter aus Fig. 2 und 3.

Obwohl ein runder Querschnitt des Behälters sowohl beim Filtrieren als auch beim Trocknen in Verbindung mit hohen Differenzdrücken eine optimale Wirkungsweise ermöglicht, können in besonderen Fällen auch andere Behälterformen nützlich sein.

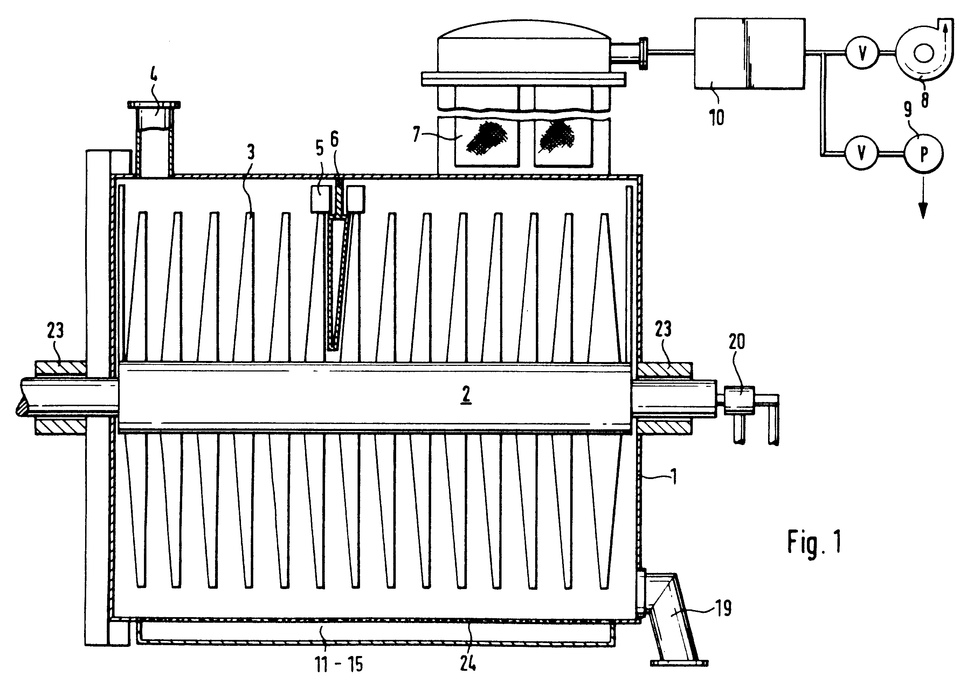

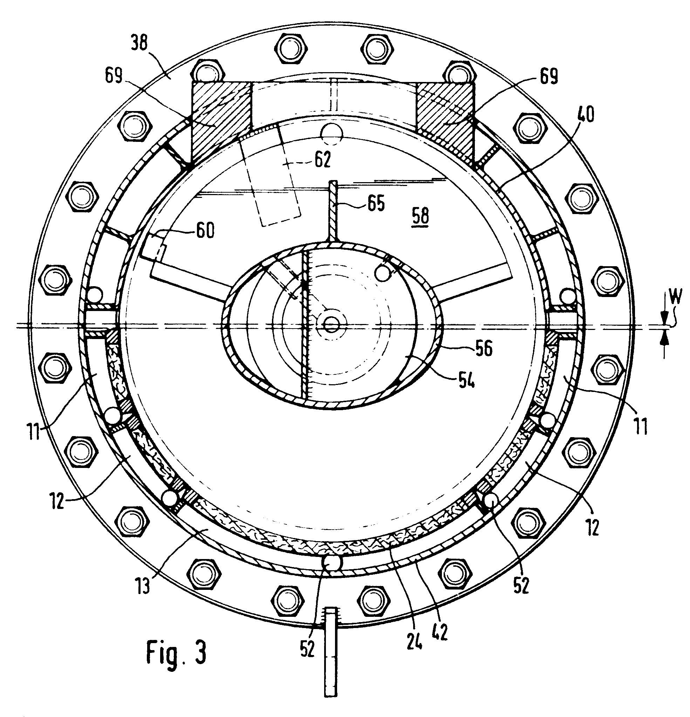

In der unteren Häfte des liegenden Zylinderbehälters nach Fig. 1 ist der Doppelmantel angeordnet, der innen durch eine Filterfläche 24 begrenzt und in einzeln hinsichtlich des angelegten Vakuum steuerbare Segmente unterteilt. Zur Unterstützung der Filtration kann der Behälter 1 Überdruck erhalten. Zunächst wird der Behälter mit Suspension gefüllt und je nach deren Feststoffgehalt später nachgefüllt. Die Filterfläche 24 ist auf mehrere Filterkammern 11 bis 15 unterteilt, die im Beispiel von Fig. 3 erkennbar sind.

Abhängig von der Art der am Ende der Filtration erwünschten Kuchenoberfläche werden die Filterkammern gleichmäßig oder differentiell gesteuert. Zur Erzielung einer ebenen Kuchenoberfläche, von der am Ende die darüber schwimmende Mutterlauge auch seitlich abgesaugt werden kann, darf nach einer gewissen Zeitdauer nur die untere Filterkammer 13 wirksam sein.

Arbeiten alle Filterkammern 11 bis 15 gleichmäßig, bildet sich eine an der Oberfläche muldenförmige Produktschicht. Mittels eines Unterdruckmeßsystems wird gegen Ende des Filtrationsvorganges festgestellt, welche Filterfläche nicht mit Produkt bedeckt ist und mehr Luft ansaugt als die anderen, deren Kammer dann sofort abgeschaltet wird.

Auf der beheizbaren Rotorwelle 2 sind Rotorscheiben 3 befestigt, deren Querschnitt nach trocknungs- und filtrationstechnischen Gesichtspunkten festgelegt ist. Durch Pendelbewegungen des Rotors von wenigen Winkelgraden wird im schmalen Bereich zwischen benachbarten Rotorscheiben 3 das Produkt homogen gehalten und nicht örtlich verdichtet. Aufgrund des nach außen verjüngten Querschnitts der Rotorscheiben entsteht eine zur gekrümmten Filterfläche 24 parallele Kraftwirkung. Am Umfang der Rotorscheiben befestigte Schaufein 5 verbleiben während des Filtrationsvorganges außerhalb des Kuchens in der oberen Behälterhälfte, in dem gemäß Fig. 1 ein Einlaßstutzen 4 und ein Filterdom 7 vorgesehen sein können, dem ein Kondensator 10, ein Abgasventilator 8 und eine Vakuumpumpe 9 nachgeschaltet sind.

Nach Absaugen der Mutterlauge wird das Produkt ein- oder mehrmal gewaschen, wozu der Filtrationsapparat auf verschiedene Arten mit dem gleichen Ziel benutzt werden kann, in kürzester Zeit ein Produkt mit zentrifugenähnlicher Waschqualität zu erreichen. Der Behälter kann mittels einer nicht gezeigten Waschdüsenleitung geflutet werden, während gleichzeitig über die Filterkammern von außen durch die Filterfläche 24 Waschflüssigkeit in den Kuchen gepreßt wird. Der von beiden Seiten befeuchtete Kuchen wird durch Pendel- oder Drehbewegungen der Rotorscheiben und der Schaufeln 5 innig mit Waschflüssigkeit durchmischt.

Zur sachgemäßen Verarbeitung von Produkten, die während der Kristallisation zum Anbacken neigen, werden die in dieser Verfahrensstufe beispielsweise als Kühlflächen wirksamen Rotorscheiben 3 bei jeder Umdrehung von sich bildenden Kristallanbackungen durch ortsfeste Abstreifer 6 gereinigt, von denen gemäß Fig. 1 der Übersicht halber nur einer gezeigt ist, die aber sämtlich auf einer gemeinsamen achsparallelen Schwenkwelle sitzen und in eine der Behälterwand benachbarte Ruhestellung verschwenkt werden können. Rotorscheiben und Rotorwelle können über den Zirkulationsanschluß 20 außerhalb der Wellenlagerung 23 mit einem geeigneten Konvektionsmedium beaufschlagt werden.

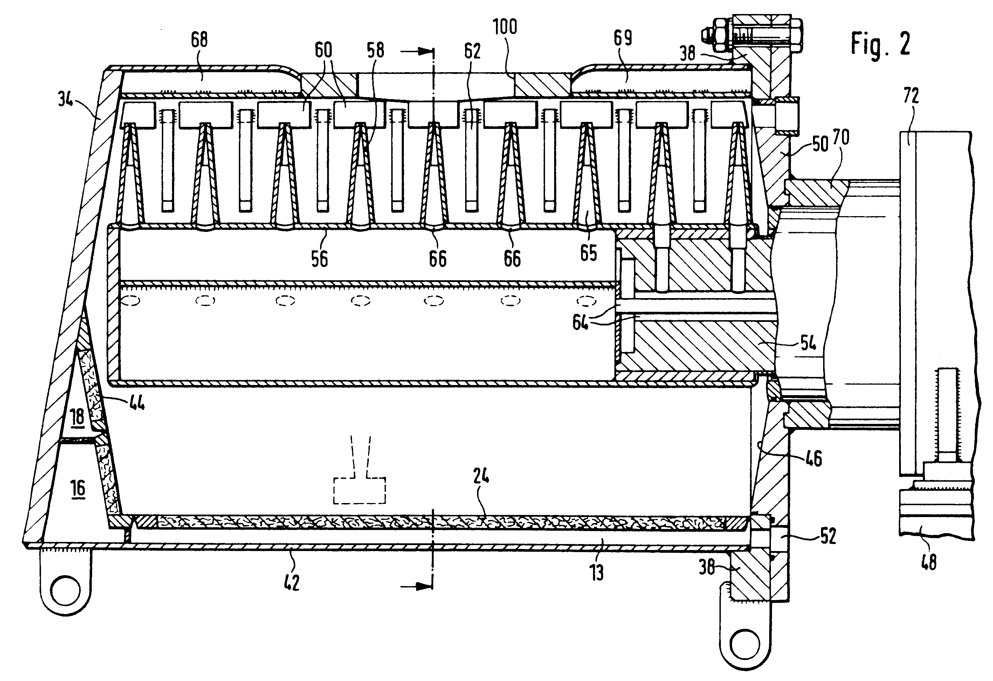

Bei einem alternativen Trocknungsverfahren, für das der Filtrationsapparat gemäß Fig. 2 bis 4 geeignet ist, wird der Behälter um 180° um seine Längsachse gedreht, so daß das Produkt nicht mehr auf der Filterfläche 24 sondern auf einer in deren Fortsetzung angeordneten halbzylindrischen Innenwand 40 ruht, die mit der Außenwand 42 des Behälters einen Doppelmantel bildet. Das Produkt wird durch Beheizung des Rotors, des durch axial verlaufende Trennleisten in Segmente unterteilten Doppelmantels 40-42 und/oder der auf dem Rotor 54 angeordneten Scheibensegmente 58 getrocknet. Hier wird mit Hilfe der Filterfläche 24 vermieden, daß vom Produkt her Staub nach außen gelangt. Die durch Segmentkammern unterteilte Filterfläche 24 kann man durch einen Druckgasstoß von außen reinigen. Dazu können in der Abschlußwand 50 vorgesehene und in die Filterkammern 11 bis 15 führende Sauganschlüsse 52 mit Druckgas beaufschlagt werden.

Gemäß Fig. 2 und 3 ist die Zirkulationkanäle 64 enthaltende Rotorwelle 54 innerhalb des Behälters 1 von einem exzentrischen, normalerweise flach liegend ovalen Rotor 56 umgeben. Auf der Rotorwelle 54 sind kühl- oder beheizbare Scheibensegmente 58 angeordnet, die sich gemäß Fig. 3 ungefähr über einen 150°-Bogen erstrecken und während der Filtration im oberen Teil des Behälters gehalten werden. Die hohlen Scheibensegmente enthalten Leitbleche 65 und sind über Öffnungen 66 im Rotormantel an die Zirkulationskanäle des Rotors angeschlossen.

Bei ungestörter Filtration auf der konkav gekrümmten Filterfläche 24 können im Produktkuchen keine Risse entstehen, weil er durch sein Eigengewicht auch von der Seite her verdichtet wird. Begünstigt wird dieser Vorgang durch fehlende Seitenreibung, da sowohl die Filterfläche als auch der Rotor äußerst glatt sind. Da Risse im Kuchen sich selbst schließen, kann im Anschluß an die Filtration mit einem Minimum von Waschflüssigkeit der Kuchen homogen gewaschen werden.

Durch eine reversierende Schwenkbewegung des abgeflachten Rotors 56 um Winkel zwischen etwa 15° bis etwa 30° wird das sich in Längsrichtung des Behälters erstreckende Kuchensegment verdichtet, ohne daß dabei ein unerwünschter, die Poren schließender Glattstreicheffekt eintritt. Gleichzeitig entsteht zwischen Rotorwelle und dem verdichteten Kuchensegment ein Spalt, der erwünscht und dazu bestimmt ist, nachfolgend Waschflüssigkeit aufzunehmen und diese möglichst gleichmäßig über die gesamte Kuchenoberfläche zu verteilen. Dazu wird Waschflüssigkeit durch die Filterkammern 11 bis 15 und/oder durch zwei nicht gezeigte Düsen enthaltende Waschleitungen 68, 69 eingeführt.

Aufgrund der im allgemeinen konkav, insbesondere zylindrisch gekrümmten Filterfläche wird der Kuchen weitgehend zwangsläufig komprimiert, da er nicht wie bei ebenen Filterböden Gelegenheit findet, dem von oben ausgeübten Druck seitlich auszuweichen. Bereits eine Teildrehung des Rotors reicht aus, um nach Ende des Waschvorganges und Absaugung der Waschflüssigkeit den Kuchen vollständig auszupressen. Dies geschieht, ohne daß an den Enden der Scheibensegmente 58 angeordnete Schaufeln 60 in den Produktkuchen eintauchen. Die Schaufeln 60 können in Fortsetzung der Stirnflächen der Scheibensegmente 58 angeordnet sein.

Da die Rotorwelle 54 schon während des Filtrationsvorganges beheizt sein kann, wird sich vor Beginn der Drehung der Rotorwelle auf ihr eine feine Puderschicht gebildet haben, die dort das Klebenbleiben des Produktkuchens verhindert. - Die beheizten Scheibensegmente 58 werden bei größerem Rotorschwenkwinkel ebenfalls aktiv und können dann auch zu einer weiteren Verdichtung des Produktkuchens mit herangezogen werden.

Wenn das Produkt unter Verwendung eines Minimums an Waschflüssigkeit vollständig von seiner Mutterlauge befreit werden soll, wird der Kuchen nach dem Absaugen der Mutterlauge verdichtet, indem der Rotor 56 um 15° bis 30° pendelt, so daß zwischen dem ovalen Rotor und der etwa ringförmig verdichteten Kuchenoberfläche ein Spalt entsteht, der für die gleichmäßige Verteilung der nachgefüllten Waschflüssigkeit wichtig ist. Nach dem Waschvorgang wird der Rotor 56 mit den Scheibensegmenten 58 durchgedreht, um den Trocknungsvorgang einzuleiten.

Ein Herstellungsverfahren beispielsweise für ein Pharmaprodukt beginnt mit der Abscheidung einer kristallinen Phase aus einer zuvor homogenen Lösung oder auch mit der Fermentation, wobei die verschiedenen Lösungsbestandteile in den Behälter eingegeben werden. Falls die Produkte während der Kristallisation zum Anbacken neigen, werden die Scheibensegmente 58 durch stehenbleibende Abstreifer 62 gereinigt. Andererseits besorgen die bei Filtration und Trocknung beheizbaren, rotierenden Scheibensegmente 58 eine günstige Durchmischung, um den Wärmeaustausch zu beschleunigen.

Außerhalb der Filterzone kann ein über die Filterkammern 11 bis 15 eingeleitetes Gaspolster aufgebaut werden, das einen Suspensionsdurchtritt durch die Filterfläche 24 und das Anbacken von Kristallen vermeidet und während der Kristallisation oder Fermentation die Suspension fluidisiert, wodurch der Wärmeaustausch ebenfalls beschleunigt wird. Bei Fermentation kann Sauerstoff durch die Filterflächen 24 eingeblasen werden.

Von der gemäß Fig. 2 bis 4 fliegend gelagerten Rotorwelle 54 kann der Behälter 1 abgezogen werden, der mit seinem Flansch 38 an einer im Maschinenständer 48 gelagerten und abgestützten Anschlußplatte 50 befestigt ist. Dadurch kann bei Produktwechsel die Reinigung am Rotor und an den Filterflächen durch Augenschein überprüft werden, nachdem der Behälter auf einer nicht gezeigten Rollenführung in Fig. 2 nach links bewegt worden ist.

Um die Filterfläche 24 vor Beeinträchtigung durch die rotierenden Schaufeln 60 zu schonen und nach Drehung des Behälters um 180° den Abstand der Schaufeln zum geschlossenen Innenwand 40 zu verringern, ist der Behälter zur Rotorachse um ein in Fig. 3 gezeigtes Maß W exzentrisch nach unten versetzt. Zu diesem Zweck wird vor dem Einschweißen der Filterfläche 24 die geschlossene Innenwand 40 ausgedreht. Auch die Schaufeln 60 der Scheibensegmente 58 werden so überdreht, daß zwischen Schaufel und Innenwand ein Abstand von nur circa 2 mm übrigbleibt, der eine restlose Beseitigung das getrockneten Gutes bei um 180° verschwenktem Behälter durch die nach unten weisende, verschließbare Öffnung 100 ermöglicht.

Die Öffnung 100 zum Einfüllen der Suspension und zum Entleeren des Produktes ist in der Längsmitte des Behälters angeordnet. Wenn die Schaufeln 60 auf den Scheibensegmenten beiderseits der Öffnung 100 entgegengesetzte Anstellwinkel haben, wird durch Rotordrehung das Produkt von beiden Behälterenden zur Mitte gefördert, wo es sich anhäuft und gut durchmischt wird. Bei entgegengesetzter Drehrichtung wird das Gut wieder verteilt, wobei dieser Vorgang zwecks Mischung beliebig wiederholt werden kann. Die oben beschriebene Exzentrizität und der geringe Abstand der Schaufeln zur Innenwand 40 ermöglichen eine restlose Entleerung.

Eine von den Schaufeln nicht erfaßte Restschicht wird mittels links und rechts der Öffnung 100 angeordneter, nicht gezeigter Vibratoren und durch deren gegenläufige Schwingungen von außen zur Mitte befördert. Gleichzeitig sorgen die für die Entleerung benutzten Vibratoren dafür, daß während der Filtration und während der Trocknung im Produktkuchen keine Risse auftreten.

Wird der Austrittstutzen stirnseitig beispielsweise entsprechend Fig. 1 bei 19 angeordnet, so kann der Filtrationsapparat bei um 180° verschwenkter Stellung als kontinuierlicher Durchlauftrockner arbeiten. Der Metallfilter-Himmel wird in diesem Fall von den Schaufeln gereinigt, soweit das Produkt nicht schon herabgefallen ist. Eine Feinreinigung kann auch durch Druckgasstöße durch die Filterkammern erfolgen. Die in Förderrichtung schräg angestellten Schaufeln besitzen eine zugespitzte Rückseite.

Gemäß Fig. 2 ist ungefähr die untere Hälfte der Behälterstirnseite als geneigte Filterfläche 44 ausgeführt, hinter der mit Vakuumanschlüssen versehene Filterkammern 16, 18 vorgesehen sind, die am Umfang an die gekrümmte Filterfläche 24 angrenzen und rückwärtig durch die hier um 15° geneigte Stirnwand 34 geschlossen sind. Dadurch wird vermieden, daß sich die Produktschicht von der Wand löst und die Waschflüssigkeit durch den sich bildenden Spalt ohne Waschwirkung abfließt. Auf der Antriebsseite rechts in Fig. 2 enthält die Ahschlußplatte 50 eine äquivalente Abschrägung 46, die im unteren Behälterbereich ähnlich dem gegenüberliegenden Ende durch eine geneigte Filterfläche ersetzt sein kann, die sich bis etwa zur Höhe des Rotors 56 erstreckt, wobei dann die Ahschlußplatte 50 durch eine schräge Stirnwand ersetzt würde.

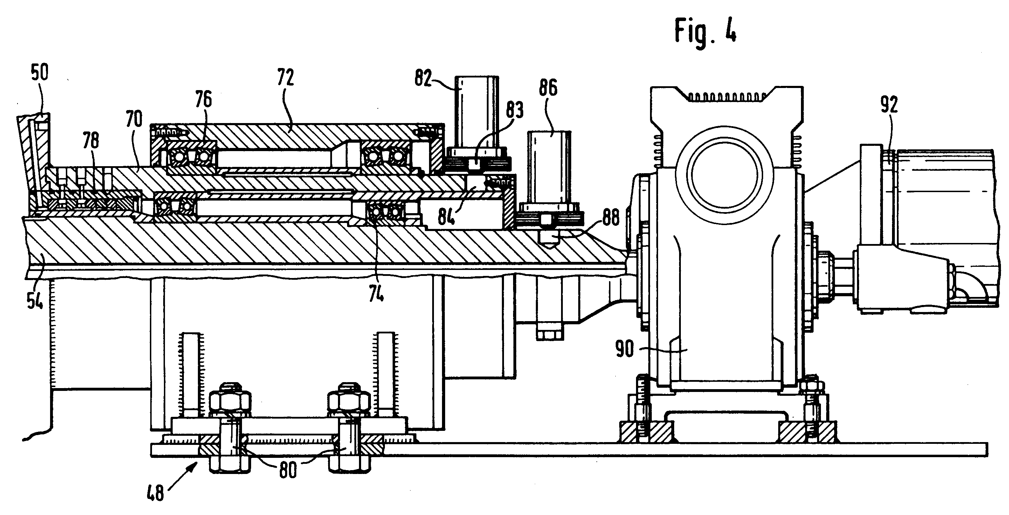

In der in Fig. 4 gezeigten Lager- und Antriebsseite des Filtrationsapparates ist die Behälterschwenkeinrichtung integriert. Auf dem Maschinenständer 48 ist ein Lagergehäuse 72 mit Hilfe von Schrauben 80 befestigt. Innerhalb des Lagergehäuses 72 ist eine mit der Ahschlußplatte 50 fest verbundene Lagerhülse 70 mit Hilfe von Wälzlagern 76 abgestützt. Die Lagerhülse 70 stützt an ihrer Innenseite mit Hilfe von Wälzlagern 74 die Rotorwelle 54 ab, zwischen deren vorderen Ende und der Lagerhülse 70 eine mehrstufige Wellendichtung 78 vorgesehen ist. Die Rotorwelle 54 wird von einem auf dem Maschinenständer 48 angeordneten stufenlosen Getriebe 90 mit einem vorgeschalteten Motor 92 angetrieben.

Fest verbunden mit dem Lagergehäuse 72 ist ein Arretierungszylinder 82, dessen Kolbenende 83 mit einer Aufnahme 84 der Lagerhülse 70 so zusammenwirkt, daß beispielsweise durch Federkraft in die Aufnahme 84 vorgeschobenem Kolben der Behälter in der Filtrationsstellung nach Fig. 2 oder in der um 180° verschwenkten Trocknungs- und Entleerungsstellung gehalten wird, der eine nicht gezeigte zweite Aufnahme 84 zugeordnet ist.

Am rückwärtigen Ende der Lagerhülse 70 ist ein Kupplungszylinder 86 befestigt, dessen Kolbenende mit einer Aufnahme 88 in der Rotorwelle 54 zusammenwirkt, um bei ausgefahrenem Kolben die Lagerhülse 70 und damit den Behälter zu seiner Schwenkung um 180° oder einer anderen Bewegung mitzunehmen. Am Ende der Schwenkung wird der Kolben des Kupplungszylinders 86 zurückbewegt und der Kolben des Arretierungszylinders 82 wieder vorgeschoben.

Der beschriebene Filtrationsapparat ist in der Lage, mehrere aufeinander folgende Verfahrensstufen automatisch durchzuführen, angefangen von der

- Kristallisation des Produktes aus einer Suspension,
- Filtration mit Waschung,
- Trocknung,
- Mischung
- Entleerung des Trockenproduktes und Weiterförderung zu Abfüllstation oder Produktbunker.

Unabhängig von der Ausführungsform des Behälters und des Behälterquerschnittes umfaßt die Erfindung alle Arten von Filterflächen mit beliebiger Krümmung. Es kann zweckmäßig sein, in einem zylindrischen Behälter eine ovale oder elliptische oder auch in sich gewellte Filterfläche anzuwenden, unabhängiger von der Form des Behälter in Längsrichtung.

## Patentansprüche

1. Filternutsch-Trockner, insbesondere zur Isolierung und Trocknung von Feststoff-Produkten aus Suspensionen, bestehend aus einem geschlossenen Behälter und einer zwischen einer Außenwand und einer mit Abstand dazu angeordneten Filterfläche gebildeten Filterkammer, die mit gesteuertem, wahlweise an eine Vakuum-, Druckgas- oder Waschflüssigkeitsquelle angeschlossenen Verteilerleitungen verbunden sind,
   **dadurch gekennzeichnet**,
   - daß der Behälter (1) eine horizontale Hauptachse aufweist, sein Mantel überwiegend in der unteren Behälterhälfte aus der konkaven, insbesondere zylindrisch zur Hauptachse gekrümmten Filterfläche (24) sowie aus der mit Abstand dazu verlaufenden Außenwand (42) besteht, während der Abstand dazwischen in eine Mehrzahl von axialen Filterkammern (11 bis 18) unterteilt ist,
   - und daß ein sich in Axialrichtung im Behälter (1) erstreckender, eine Mehrzahl nebeneinander angeordneter, radial gerichteter, insbesondere beheizbarer Scheiben (3) oder Scheibensegmente (58) tragender und Zirkulationsleitungen enthaltender Rotor (2; 56) zum Homogenisieren des Produktkuchens während der Filtration oder zum Waschen und zum Trocknen des Produktes nach der Isolierung an einen Antrieb für pendelnde oder reversierbare Drehbewegungen angeschlossen ist.

2. Filternutsch-Trockner nach Anspruch 1, dadurch gekennzeichnet, daß die jeweiligen Filterflächen (24) über ein zu den Filterkammern (11 bis 18) führendes Verteilerleitungssystem und wahlweise anschließbare Vakuum- oder Druckgasquellen sowohl mit Überdruck im Behälter (1) und äußerem Vakuum als auch mit äußerem Überdruck und Vakuum oder Normaldruck im Behälter beaufschlagbar sind.

3. Filternutsch-Trockner nach Anspruch 1 oder 2, dadurch gekennzeichnet, daß die Filterflächen (24) aus durch Sinterung miteinander verbundenen Metallgeweben oder aus mit Metallgeweben vereinigtem Sinterwerkstoff, Kunststoff oder anderem Filtermaterial bestehen.

4. Filternutsch-Trockner nach einem der vorhergehenden Ansprüche, dadurch gekennzeichnet, daß die Verteilerleitungen über Ventile von einem elektronischen Meß- und Regelsystem aus steuerbar sind.

5. Filternutsch-Trockner nach einem der vorhergehenden Ansprüche, dadurch gekennzeichnet, daß die Filterflächen (24) über das Verteilerleitungssystem von einer Waschflüssigkeitsquelle beaufschlagbar sind und zum gleichzeitigen Fluten des Behälters dort mündende Sprühdüsen einer Waschflüssigkeitsleitung vorgesehen sind.

6. Filternutsch-Trockner nach einem der vorhergehenden Ansprüche, dadurch gekennzeichnet, daß ein von Filterflächen (24) freier Bereich des Behältermantels sich als kontinuierliche Fortsetzung des Behälterinnenumfangs an die Filterfläche anschließt und die Innenwand eines beheizbaren Doppelmantels (40, 42) bildet.

7. Filternutsch-Trockner nach einem der vorhergehenden Ansprüche, dadurch gekennzeichnet, daß ungefähr die Hälfte der Behälterstirnseiten als geneigte Filterflächen (44) mit dahinter angeordneten Filterkammern (16, 18) ausgebildet ist, die am Umfang an die gekrümmte Filterfläche (24) des Mantels anschließen.

8. Filternutsch-Trockner nach einem der vorhergehenden Ansprüche, dadurch gekennzeichnet, daß der Rotor (56) aus einem Hohlkörper mit abgeflachtem, insbesondere ovalem oder elliptischem Querschnitt besteht, der im Filtrationsbetrieb von einer flachen Ausgangsstellung zu reversierenden Schwenkbewegungen zwischen ungefähr 15° und 30° angetrieben ist.

9. Filternutsch-Trockner nach Anspruch 8, dadurch gekennzeichnet, daß der Rotor (56) auf einer abgeflachten Seite nebeneinander Scheibensegmente (58) trägt, die sich symmetrisch über einen Bogen bis ungefähr 150° erstrekken und zur Unterstützung der Nachverdichtung des Produktkuchens während der Schwenkbewegungen des Rotors radiale Stirnflächen aufweisen.

10. Filternutsch-Trockner nach einem der vorhergehenden Ansprüche, dadurch gekennzeichnet, daß nebeneinander mehrere Abstreifschaber (62) vorgesehen sind, die sich jeweils zwischen die benachbarten Scheiben (3) oder Scheibensegmente (58) erstrecken und insbesondere gemeinsam auf einer in der Nähe des Behältermantels gelagerten Schwenkwelle in eine dem Behälterumfang nahe Ruhestellung schwenkbar sind.

11. Filternutsch-Trockner nach einem der vorhergehenden Ansprüche, dadurch gekennzeichnet, daß die hohl und mit inneren Leitblechen für ein Heizmedium ausgeführten Scheibensegmente (58) an Zirkulationsleitungen im Rotor (56) angeschlossen sind.

12. Filternutsch-Trockner nach einem der vorhergehenden Ansprüche, dadurch gekennzeichnet, daß jede Scheibe (3) oder jedes Scheibensegment, insbesondere als äußere Fortsetzung einer Stirnfläche, wenigstens eine Schaufel (60) trägt.

13. Filternutsch-Trockner nach Anspruch 12, dadurch gekennzeichnet, daß die Schaufeln (60) zum Produkttransport in Längsrichtung des Behälters einen Anstellwinkel und an ihrer Rückseite Stromlinienform haben.

14. Filternutsch-Trockner nach einem der vorhergehenden Ansprüche, dadurch gekennzeichnet, daß die Oberflächen der Scheibensegmente (58) wenigstens teilweise als Filterflächen ausgebildet und über Verteilerleitungen innerhalb des Rotors (54) wahlweise mit Saugdruck oder mit Trocknungsgas beaufschlagbar sind.

15. Filternutsch-Trockner nach Anspruch 14, dadurch gekennzeichnet, daß die Scheibensegmente (58) anteilig als vom Heizmedium durchströmte Kontakttrocknerflächen und als Filterflächen ausgeführt sind.

16. Filternutsch-Trockner nach einem der vorhergehenden Ansprüche, dadurch gekennzeichnet, daß der Rotor (56) auf einer Rotorwelle befestigt ist, die in einem Maschinenständer (48) fliegend gelagert ist.

17. Filternutsch-Trockner nach Anspruch 16, dadurch gekennzeichnet, daß der Behälter mit einer von seiner einen Stirnseite ausgehenden Lagerhülse (70) auf der von einem Maschinenständer (48) vorstehenden Rotorwelle (54) um wenigstens 180° schwenkbar gelagert ist.

18. Filternutsch-Trockner nach einem der vorhergehenden Ansprüche, dadurch gekennzeichnet, daß die der Filterfläche (24) diametral gegenüberliegende Behälterwand (40) wenigstens eine verschließbare Auslaßöffnung (100) enthält.

19. Filternutsch-Trockner nach Anspruch 18, dadurch gekennzeichnet, daß beidseitig neben der Auslaßöffnung (100) Vibratoren angeordnet sind, um das Produkt von den Endbereichen des Behälters zur Mitte zu fördern.

20. Filternutsch-Trockner nach einem der vorhergehenden Ansprüche, dadurch gekennzeichnet, daß der Rotor (56) und die Rotorwelle (54) bezüglich der Längsachse des zylindrischen Behälters (1) exzentrisch um ein Maß (W) nach oben versetzt sind, durch das der Abstand der Schaufeln (60) von der geschlossenen Behälterwand (40) einen Mindestwert besitzt.

21. Filternutsch-Trockner nach einem der vorhergehenden Ansprüche, dadurch gekennzeichnet, daß die der Filterfläche (24) gegenüberliegende Behälterwand (40), insbesondere für den Kristallisationsvorgang mit dem um 180° verschwenkten Behälter als eine Wärmeaustauscherfläche, insbesondere zur Kühlung, ausgebildet ist.

**Claims**

1. Suction filter dryer, in particular for the isolation and drying of solid products from suspensions, consisting of a closed container and a filter chamber which is formed between an outer wall and a filter area arranged at a distance therefrom, the container and filter chamber being connected to controlled distributing lines selectively attached to a vacuum, pressurised gas or washing fluid source, characterised in that the container (1) has a horizontal main axis, its casing, predominantly in the lower half of the container, consists of the concave filter area (24) which is bent, in particular cylindrically with respect to the main axis, and of the outer wall (42) extending at a distance therefrom while the distance therebetween is divided into a plurality of axial filter chambers (11 to 18), and in that a rotor (2; 56) extending axially in the container (1), carrying a plurality of radially directed, in particular heatable plates (3) or plate segments (58) arranged next to one another and containing circulation lines is connected to a drive for oscillating or shuttle-type rotary movements to homogenise the cake of product during filtration or to wash and to dry the product after isolation.

2. Suction filter dryer according to claim 1, characterised in that the respective filter areas (24) can be loaded via a distributing line system leading to the filter chambers (11 to 18) and selectively attachable vacuum or pressurised gas sources with excess pressure in the container (1) and external vacuum as well as with external excess pressure and vacuum or normal pressure in the container.

3. Suction filter dryer according to claim 1 or 2, characterised in that the filter areas (24) consist of metal cloths which are connected to one another by sintering or of sintered material which is combined with metal cloths, plastics material or other filter material.

4. Suction filter dryer according to one of the preceding claims, characterised in that the distributing lines can be controlled via valves by an electronic measuring and control system.

5. Suction filter dryer according to one of the preceding claims, characterised in that the filter areas (24) can be loaded via the distributing line system by a source of washing fluid and, for the simultaneous flooding of the container, spray nozzles of a washing fluid line which open therein are provided.

6. Suction filter dryer according to one of the preceding claims, characterised in that a region of the container casing which is free from filter areas (24) is attached to the filter area as a continuous extension of the internal periphery of the container and forms the internal wall of a heatable double casing (40, 42).

7. Suction filter dryer according to one of the preceding claims, characterised in that approximately half of the end faces of the container is constructed as inclined filter areas (44) with filter chambers (16, 18) arranged behind them and attached to the bent filter area (24) of the casing at the periphery.

8. Suction filter dryer according to one of the preceding claims, characterised in that the rotor (56) consists of a hollow body with a flattened, in particular oval or elliptical cross section, which is driven from a flat starting position into shuttling pivoting movements between about 15° and 30° during the filtration operation.

9. Suction filter dryer according to claim 8, characterised in that the rotor (56) carries, on a flattened side, adjacent plate segments (58) which extend symmetrically over an arc of up to about 150° and have radial end faces to assist the subsequent compaction of the cake of product during the pivoting movements of the rotor.

10. Suction filter dryer according to one of the preceding claims, characterised in that several scrapers (62) are provided next to one another, which extend in each case between the adjacent plates (3) or plate segments (58) and, in particular, can be pivoted together on a pivot shaft mounted in the vicinity of the container casing into a rest position close to the periphery of the container.

11. Suction filter dryer according to one of the preceding claims, characterised in that the plate segments (58) which are hollow and are designed with internal baffle plates for a heating medium are attached to circulation lines in the rotor (56).

12. Suction filter dryer according to one of the preceding claims, characterised in that each plate (3) or each plate segment carries at least one blade (60), in particular as an outer extension of an end face.

13. Suction filter dryer according to claim 12, characterised in that the blades (60) have an angle of attack for conveying the product in the longitudinal direction of the container and a streamlined form on their back.

14. Suction filter dryer according to one of the preceding claims, characterised in that the surfaces of the plate segments (58) are constructed at least partially as filter areas and can be loaded selectively with suction pressure or with drying gas via distributing lines within the rotor (54).

15. Suction filter dryer according to claim 14, characterised in that the plate segments (58) are designed proportionally as contact dryer areas permeated by the heating medium and as filter areas.

16. Suction filter dryer according to one of the preceding claims, characterised in that the rotor (56) is fastened on a rotor shaft which is mounted in cantilever fashion in a machine pillar (48).

17. Suction filter dryer according to claim 16, characterised in that the container is mounted pivotally round at least 180° on the rotor shaft (54) projecting from a machine pillar (48) by a bearing bush (70) issuing from one of its end faces.

18. Suction filter dryer according to one of the preceding claims, characterised in that the container wall (40) diametrally opposed to the filter area (24) contains at least one sealable outlet opening (100).

19. Suction filter dryer according to claim 18, characterised in that vibrators are arranged next to the outlet opening (100) on both sides in order to convey the product from the end regions of the container to the centre.

20. Suction filter dryer according to one of the preceding claims, characterised in that the rotor (56) and the rotor shaft (54) are offset upwardly eccentrically to the longitudinal axis of the cylindrical container (1) by an amount (W) by means of which the distance between the blades (60) and the closed container wall (40) has a minimum value.

21. Suction filter dryer according to one of the preceding claims, characterised in that the container wall (40) opposite the filter area (24) is constructed, in particular for the crystallisation process, with the container pivoted through 180° as a heat exchanger face, in particular for cooling purposes.

**Revendications**

1. Filtre sécheur à succion, en particulier, pour isoler et sécher des produits solides en suspension, constitué d'un récipient fermé et d'une chambre de filtration, formée entre une paroi extérieure et une surface de filtration qui est disposée à une certaine distance de cette dernière, récipient et chambre étant reliés à des canalisations de répartition commandées, raccordées ellesmême à une source de gaz sous pression ou sous vide, ou de liquide de lavage,

caractérisé en ce que le récipient (1) présente un axe principal horizontal, en ce que sa surface extérieure principalement dans la partie inférieure du récipient, est constituée de la surface de filtration (24) concave, en particulier courbée en forme de cylindre vers l'axe principal, ainsi que de la paroi extérieure (42) disposée à une certaine distance de celle-ci, tandis que la distance entre ces deux surfaces est séparée axialement en plusieurs chambres de filtration (11 à 18),

et en ce que, pour homogénéiser la gâteau de produit pendant la filtration ou pour laver et sécher le produit après séparation, un rotor (2; 56), disposé dans le récipient (1) suivant la direction axiale, portant un certain nombre de disques (3), ou d'éléments de disques (58), disposés à côté les uns des autres, dirigés radialement, en particulier de disques ou d'éléments de disque chauffants, et contenant des canalisations de circulation est raccordé à un entraînement assurant des mouvements de rotation pendulaires, ou réversibles.

2. Filtre sécheur à succion suivant la revendication 1, caractérisé en ce que, par l'intermédiaire d'un système de conduites de répartition conduisant aux chambres de filtration (11 à 18), et que l'on peut à volonté raccorder à des sources de pression ou de vide, on peut appliquer à chacune des surfaces de filtration (24) aussi bien une surpression dans le récipient (1) et un vide à l'extérieur qu'également une surpression à l'extérieur et un vide ou une pression normale dans le récipient (1).

3. Filtre sécheur à succion suivant la revendication 1 ou la revendication 2, caractérisé en ce que les surfaces de filtration (24) sont constituées de tissus métalliques reliés entre eux par frittage ou de produit de frittage, matière plastique ou autre matériau filtrant, réuni par des tissus métalliques.

4. Filtre sécheur à succion suivant l'une quelconque des revendications précédentes, caractérisé en ce que les canalisations de répartition peuvent être commandées à partir d'un système électronique de mesure et de régulation.

5. Filtre sécheur à succion suivant l'une quelconque des revendications précédentes, caractérisé en ce qu'on peut appliquer aux surfaces de filtration (24), par le système de répartition, une source de liquide de nettoyage et qu'on a prévu des buses d'arrosage d'une canalisation de liquide de lavage débouchant dans le récipient pour envoyer, en même temps, un jet dans le récipient.

6. Filtre sécheur à succion suivant l'une quelconque des revendications précédentes, caractérisé en ce qu'une zone de la paroi du récipient, sans surfaces de filtration (24), sous la forme d'un prolongement de la périphérie intérieure du récipient, se raccorde à la surface du filtre et forme la paroi intérieure d'une double paroi (40, 42) chauffable.

7. Filtre sécheur à succion suivant l'une quelconque des revendications précédentes, caractérisé en ce qu'environ la moitié des faces frontales du récipient est réalisée sous la forme de surfaces frontales inclinées (44) comportant des chambres de filtration (16, 18), disposées en arrière, qui se raccordent sur leur périphérie à la surface de filtration courbe (24) de la paroi extérieure.

8. Filtre sécheur à succion suivant l'une quelconque des revendications précédentes, caractérisé en ce que le rotor (56) est constitué d'un corps creux, comportant une section aplatie, en particulier ovale ou elliptique, corps creux qui, lorsque la filtration fonctionne, est entraîné, à partir d'une position de repos à plat, dans des mouvements d'oscillation réversibles d'environ 15 à 30°.

9. Filtre sécheur à succion suivant la revendication 8, caractérisé en ce que le rotor (56) porte des segments de disque (58) placés les uns à côté des autres sur une face aplatie, segments qui s'étendent de façon symétrique suivant un arc de cercle allant jusqu'à environ 150° et qui présentent des surfaces frontales radiales pour aider à la densification du gâteau de produit pendant les mouvements d'oscillation du rotor.

10. Filtre sécheur à succion suivant l'une quelconque des revendications précédentes, caractérisé en ce que sont prévues plusieurs raclettes (62) placées les unes à côté des autres, qui s'étendent chacune entre chacun des disques (3) voisins, ou des segments de disque (58), et qui, en particulier, peuvent pivoter ensemble, sur un arbre d'oscillation placé au voisinage de la paroi du récipient, vers une position de repos, voisine de la périphérie du récipient.

11. Filtre sécheur à succion suivant l'une quelconque des revendications précédentes, caractérisé en ce que les segments de disque (58), exécutés creux et avec des tôles intérieures de guidage pour un fluide de chauffage, sont raccordés à des canalisations de circulation dans le rotor (56).

12. Filtre sécheur à succion suivant l'une quelconque des revendications précédentes, caractérisé en ce que chaque disque (3), ou chaque segment de disque (58), porte au moins une palette (60), en particulier sous la forme d'un prolongement extérieur d'une face frontale.

13. Filtre sécheur à succion suivant la revendication 12, caractérisé en ce que les palettes (60), pour le transport du produit dans la direction longitudinale du récipient, ont un angle de réglage et, sur leur face arrière, une forme de lignes de courant.

14. Filtre sécheur à succion suivant l'une quelconque des revendications précédentes, caractérisé en ce que les surfaces extérieures des segments de disque (58) sont, au moins en partie, réalisées sous la forme de surfaces filtrantes et qu'on peut leur appliquer à volonté, par l'intermédiaire de canalisations de répartition à l'intérieur du rotor (54), une pression d'aspiration ou un gaz de séchage.

15. Filtre sécheur à succion suivant la revendication 14, caractérisé en ce que les segments de disque (58) sont, pour une pert, exécutés sous la forme de surfaces de séchage par contact, traversées par un fluide caloporteur, et sous la forme de surfaces filtrantes.

16. Filtre sécheur à succion suivant l'une quelconque des revendications précédentes, caractérisé en ce que le rotor (56) est fixé sur un arbre de rotor qui est monté flottant dans un montant de machine (48).

17. Filtre sécheur à succion suivant la revendication 16, caractérisé en ce que le récipient est monté de façon à pouvoir basculer d'au moins 180°, avec une douille de palier (70) dépassant de l'une de ses faces frontales, sur l'arbre (54) du rotor, sortant d'un montant de machine (48).

18. Filtre sécheur à succion suivant l'une quelconque des revendications précédentes, caractérisé en ce que la paroi (40) du récipient, disposée diamétralement du côté opposé à la surface de filtration (24), comporte au moins un orifice de sortie (100), obturable.

19. Filtre sécheur à succion suivant la revendication 18, caractérisé en ce que, des deux côtés, contre l'orifice de sortie (100), sont disposés des vibrateurs pour transporter le produit des zones d'extrémité vers le milieu.

20. Filtre sécheur à succion suivant l'une quelconque des revendications précédentes, caractérisé en ce que le rotor (56) et l'arbre (54) du rotor sont, par rapport à l'axe horizontal du récipient (1) cylindrique, décalés excentriquement vers le haut, d'une certaine quantité W.

21. Filtre sécheur à succion suivant l'une quelconque des revendications précédentes, caractérisé en ce que la paroi (40) du récipient, opposée à la surface filtrante (24), est réalisée, en particulier pour l'opération de cristallisation avec le récipient basculé de 180°, sous la forme d'une surface d'échange de chaleur, en particulier destinée au refroidissement.

Fig. 1

Fig. 2

Fig. 3

Fig. 4